# EUROPEAN PATENT SPECIFICATION

(11) **EP 0 647 599 B1**
(45) Date of publication and mention of the grant of the patent: **10.05.2000**
(21) Application number: 94102273.3
(22) Date of filing: 15.02.1994
(51) Int. Cl.: C03B 40/027

(54) **Automatic blank-mold sooting device in the glass making industry and relevant sooting process**
Automatische Russvorrichtung einer Vorform in der Glasindustrie und Verfahren zum Russen dieser Vorform
Appareil de poudrage automatique d'un moule d'ébaucheur pour l'industrie du verre et procédé de poudrage

(30) Priority: 11.10.1993 IT PN930065
(43) Date of publication of application: 12.04.1995
(73) Proprietor: Aziende Vetrarie Industriali Ricciardi-Avir S.p.A., 20094 Corsico (Milano) (IT)
(72) Inventor: Morettin, Ambrogio, I-30020 Settimo, (Venezia) (IT)
(74) Representative: Gustorf, Gerhard, Dipl.-Ing.

(56) References cited:
- EP-A- 0 125 477
- EP-A- 0 368 267
- EP-A- 0 393 554
- EP-A- 0 443 794
- US-A- 3 141 752

## Description

The present invention relates to a device for manufacturing glass containers, comprising:
- a blank mold,
   -- the bottom of said mold being provided with plugging means having a plunger guided within a sleeve and a collar, within which a ring is fitted, for the insertion of said sleeve,
- a funnel and a baffle both being adapted to engage the upper opening of the mold, whereby the baffle may also be engaged with the upper opening of the funnel,
- and a sooting device adapted to deposit on the internal walls of the mold a lubricating and detaching layer substantially made of carbon black.

Such a device is known from US-A-3 141 752. Sooting of the mold is effected by a lubricant such as oil or the like that is sprayed through bores of the upper funnel when the mold bottom is closed. This means that it is impossible to cover the whole surface of the inner walls of the mold and the whole outer surface of the plunger and of the sleeve surfaces. Further, during the sooting phase the collar remains in its position at the bottom of the mold and is used to transfer the parison to a blow mold before the next sooting phase that takes place after each molding process. This is necessary because a lubricant is used, such as oil or the like.

In EP-A-443 794 an automatic blank mold sooting device is described that is adapted to deposit on the internal walls of the mold a lubricating and detaching layer subtantially made of carbon black. The bottom of said mold is provided with plugging means having a plunger guided within a sleeve and adapted to disengage the bottom during a blank mold sooting phase. However, during the sooting process a neck ring and a guide ring remain in their closing position at the bottom of the blank-mold; only the plunger is moved downwards when a lubricating carbon layer is injected from the nozzle.

EP-A 393 554 shows the lower part of a burner for spraying a lubricating and detaching layer into a mold, using an acetylene flow that is ignited by means of an arc.

Further devices are well known in the art in which a pilot flame is provided which is able to ignite the acetylene flow in correspondence of a well defined moment of an operation cycle, not in correspondence of every operation cycle, but just once every n cycles, according to the specifications of glassware to be obtained. In such a way, acetylene black process is able to coat the internal walls of the blank mold. But this solution has several drawbacks. Indeed:
- heat produced by the pilot flame heats the environment around the blank mold, whereby the operator is working in difficult conditions;
- the pilot flame is fed by oxygen and methane, whose cost is nearly equal to 60% of overall energy costs of a hollow glass forming plant;
- oxygen and methane, which are feeding the pilot flame, are able to oxidize acetylene, whereby carbon black which coats the internal mold walls, can lose its properties;
- some portions of the blank mold are oxidized instead of lubricated by a pilot flame feeder, whereby the same portions could slacken the loading process of the gob into the blank mold; sometimes the blank mold supports are blocking, due to overheating produced by the pilot flame;
- and, last but not least, the acetylene black process does not provide the bottom of the blank mold with acetylene black, because of a collar in correspondence with the bottom of the blank mold. Said collar closes airtightly said bottom, whereby the flame which is fed by acetylene, is not allowed to reach the mold bottom, because it reverberates the flame, whereby not all of the portions of the internal mold walls can be involved by a substantially uniform lubricating coat.

It is an object of the invention to present a device for manufacturing glass containers with automatic blank-mold sooting which allows to obtain a substantially uniform and complete coating of all the portions of the internal blank-mold in a very simple manner without any dead time of the functional elements during the sooting phase and the transfer of the parison to the following blow mold.

This problem is solved by a device having the characterising features of claim 1. The dependent claims refer to further characteristics of the invention which will be apparent from the following description of the drawings, in which
Fig. 1 represents a perspective schematic view of a hollow glassware forming plant;
Fig. 2 represents a sectional view, taken according the axial development of a blank mold, when a glass gob drops into said mold;
Fig. 3 represents the same view of Fig. 2, taken during a sooting process;
Fig.4 represents the same view of Figs.2,3, where a glass gob reaches the bottom of said mold;
Fig.5 represents the same view of Figs.2,3,4 where a glass gob is pre-formed into a parison in a blank mold;
Figs.6,7,8 represent three following phases of a glass gob forming process in a blank mold, where a plunger and not an air blow is pre-forming a glass gob into a parison;
Fig.9 represents a synthetic table, which describes the sequence of the phases in an operation cycle of the device according to the invention.

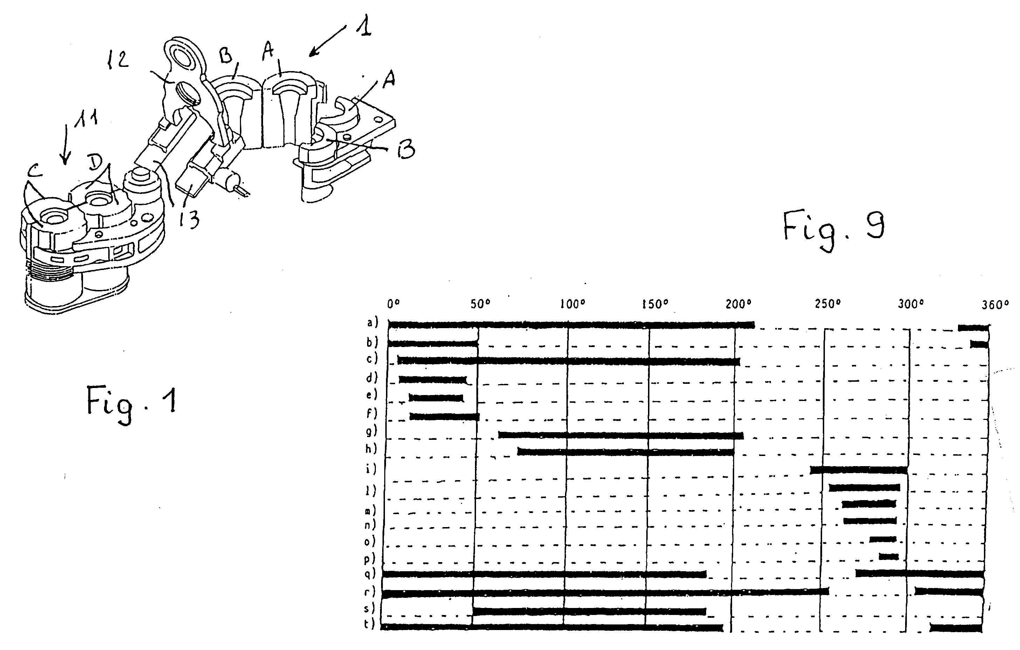

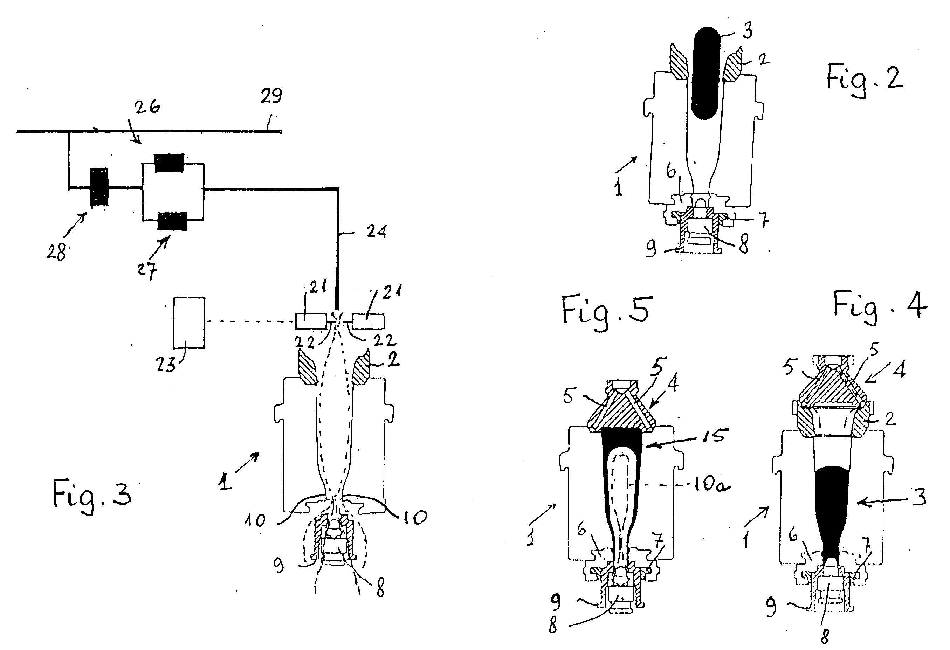

The device according to the invention comprises a blank mold 1 (Figs.2,3,4,5), which is represented in Fig.1 as a two molds one-section machine, each one of them comprising two half portions, respectively A-A and B-B. Said mold presents in correspondence of its top a funnel 2 (Figs.2,3,4), which makes a glass gob 3 drop into the blank mold (Fig.2). As Fig.1 shows, four mold portions A-A-,B-B are opened in the drawing, whereas they are closed during a running operation, as it will be apparent later on. A baffle 4 is provided on the funnel 2 (Fig.4) or directly on mold top (fig.5), depending on which phase the running operation is working in. Baffle 4 internally contains some channels 5, through which air is blown into the blank mold, as it will be explained later on. A collar 6 is provided at bottom of blank mold 1 and, like said blank mold, it is made of two portions. Within a ring slit of the collar 6, a ring 7 is fitted, which is a single piece. Ring 7 presents a seat, inside which a plunger 8 is adapted to slide (Figs.2,3,4,5). A bottom 10 represents the lowest portion of blank mold 1. Collar 6, ring 7 and plunger 8 represent plugging means of bottom 10, together with a sleeve 9, which presents a hole, which the plunger 8 is adapted to slide into.

Sleeve 9, as it will be apparent forwards, is adapted to follow a parison, i.e. a pre-formed glass 15, which will be successively finished in a blow mold 11. This latter is represented in Fig.1 in a position, where two portions C-C-,D-D (which correspond to two portion A-A-,B-B of blank mold 1) are closed. Said parison 15 is produced thanks to a so-called "counter-blow air", which is represented in Fig.5 by a dashed line 10a. Said counter-blow air is blown from bottom through an internal channel (not represented in the drawings) of plunger 8. Parison is adapted to be transferred, as it will be apparent later on, from blank mold 1 to blow mold 11, by means of an invert, which is represented in Fig.1 by an arm 12, connected to two supports 13.

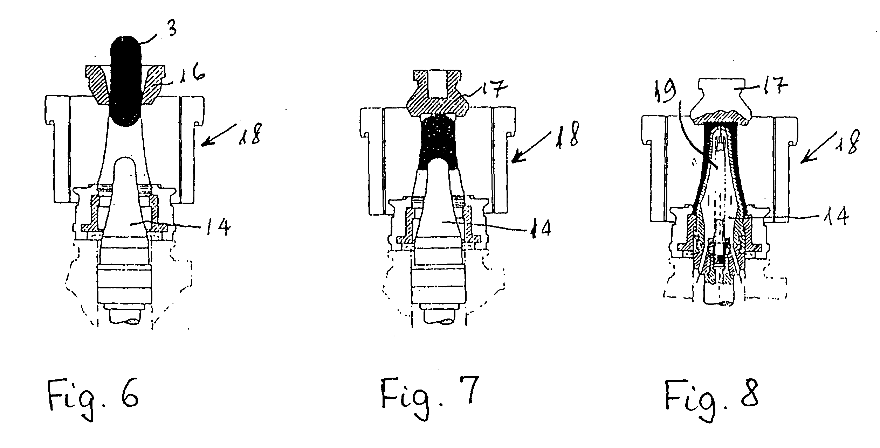

Plunger 8 of Figs.2,3,4,5 can assume a shape of a plunger 14 of Figs.6,7,8 whenever the glass gob is pre-formed not by a blow air, but by the action of the plunger 14. Fig.6 shows the presence of a funnel 16, which is similar to funnel 2 of Figs.2,3, whereas a baffle 17 plays the same role of baffle 4 of Figs.4,5. Plunger 14 is adapted to assume at least three different positions: a lower position, as long as the glass gob drops through the funnel 16 of a blank mold 18; an intermediate position, which corresponds to the running operation, when baffle 17 matches to the blank mold 18, where it serves as a sealing device; and un upper position, where the glass gob 3 is formed into a definitive shape 19 by plunger 14.

Above funnel 2 of Fig.3, a support 21 of two electrodes 22 is provided, which are controlled by a device 23. The latter is adapted, as it will explained later on, to generate sparks, in a way known per se and in correspondence of a definite time of running operation cycle, between electrodes 22, causing, in such a way, a piezoelectric ignition of fuel. Support 21, electrodes 22 and device 23 represent electrical ignition sparking means of device according to the invention. It is apparent that ignition of fuel could be electrically obtained also, in a way known per se, by means of a voltaic arc or of an electric resistance, not represented in the drawings. Device 23 is controlled, in a way known per se, by operation cycle timing means not represented in the drawings. These ones are, among other things, adapted to decide the choice of one active cycle every n operating cycles, depending on plant type and on glassware type to manufacture. Also the positioning of components 21,22,23,24 on each blank mold 1, in correspondence of each sooting process of blank mold is committed to operation cycle timing means. Acetylene flow is controlled by pressure modulation means, which are represented by a solenoid valve 26. Another solenoid valve 27 secures, as it will be explained later on, full pressure acetylene feeding in pipe 24, whereas a faucet 28 controls acetylene flow from a main pipe 29. Valve 26 is activated whenever an automatic blank mold sooting process is going to start, by throttling pipe 29 and allowing it to supply a reduced, at low pressure, acetylene flow. Substantially in the same moment, when acetylene flow is starting, electrodes 22 are sparking, and, after a split second, substantially after 1/10 sec., valve 27 intervenes, which is able to feed pipe 24 at full pressure. Each valve 26,27 is connected to a tap, not represented in the drawings, for the manual acetylene flow control. Operation cycle timing means are not only in charge of positioning support 21, electrodes 22 and device 23 above each blank mold 1, but also of controlling sparking of electrodes 22 (Fig.3), in correspondence of the exact moment when the acetylene flow is starting. In addition, operation cycle timing means are adapted to control valves 26,27, opening and closing of blank mold 1, of blow mold 11 and to control the invert arm 12. As for blank mold 1, operation cycle timing means control the positioning of funnel 2, the dropping of glass gob through funnel 2, the positioning of baffle 4 on funnel 2, the intervening of collar 6 and ring 7, as well as of plunger 8 and sleeve 9. It should be noticed that operation cycle timing means are able to control the sequence of phases in an operation cycle of device according to the invention. In order to better understand the meaning of said sequence, all phases of said operation cycle are synthetically listed in the table of Fig.9, where said cycle is extended to an operation dimension of 360°. In detail:
- a) line points out blank mold 1 closing;
- b) line points out funnel 2 coming downwards;
- c) line points out sleeve 9 coming upwards;
- d) line points out plunger 8 coming upwards;
- e) line points out baffle 4 coming downwards;
- f) line points out air blowing pre-forming phase;
- g) line points out baffle 4 coming downwards;
- h) line points out counter-air blowing into blank mold 1;
- i) line points out collar 6 inversion with pre-formed parison,
- l) line points out blank mold 1 second closing;
- m) line points out funnel 2 coming downwards;
- n) line points out sooting means active positioning;
- o) line points out sooting means activation;
- p) line points out sooting means steady feeding;
- q) line points out blow mold 11 closing;
- r) line points out arm 12 revert phase;
- s) line points out final air blowing into blow mold 11;
- t) line points out, at last, bottle take-out from the blow mold 11.

Operation cycle of device according to the invention is starting immediately before glass gob 3 drops into the blank mold 1. Exactly in correspondence of this moment (equal to 0° of running cycle), two portions A-A and B-B (Fig.1) are closing and funnel 2 is positioned on blank mold 1 top (Fig.2). After a few degrees, i.e. after glass gob dropping into the blank mold, sleeve 9 is moved upwards, in such a way that plugging means (6,7,8,9) are activated, which are closing blank mold bottom 10. Therefore, gob is reaching said bottom 10 and can't leave it (Fig.4). Now, operation cycle timing means are controlling, in a way known per se, the baffle 4 positioning on funnel 2. Settle air is blown through channels 5 of baffle 4. All this for ensuring that the glass gob is reaching blank mold bottom 10. Nearly in correspondence of 60° of operation cycle, baffle 4 is removed, funnel 2 moves out and baffle 4 comes down again, this time covering the blank mold, where it serves as a sealing device (Fig.5). Nearly at 75° degrees of running cycle, counter-air is blown from bottom, because, just a bit earlier (44° of running cycle), plunger 8 came down, so that counter-blow air 10a can pre-form parison 15. Nearly at 200° of running cycle, sleeve 9 is moved down, baffle 4 is removed and, at last, blank mold 1 is opening into two portions A-A and B-B, so that parison can be transferred to blow mold 11. During transfer operation, collar 6 and ring 7 are joining parison 15 and, consequently, they are leaving blank mold bottom 10, in such a way that plugging means are no more active.

Immediately afterwards, blank mold 1 closes again, and funnel 2 is positioned on blank mold 1, so that sooting means can start working, in the case n cycles, which are planned by operation cycle timing means 20, elapsed. Therefore, if a sooting cycle is planned, all proceeds as it will be explained later on. Otherwise, the operation cycle proceeds and the sooting device is not activated, as long as a sooting cycle is planned, in a next operation cycle. In such a case, blank mold 1 appears as in Fig.3, where plunger 8 is lowered nearly 25,4 mm (one inch), with respect to blank mold plugging position. In addition, neither collar 6, nor ring 7 are present, because, as stated earlier, they had been transferred by the inverting arm 12 and they are integral with parison, in correspondence of blow mold 11. Sooting automatic device is, at first, positioned, in a way known per se, above each blank mold 1, together with supports 21, electrodes 22, device 23 and acetylene pipe 24. Device 23 controls the piezoelectric ignition of acetylene flow by means of electrodes 22, whose gap is such as to avoid disruption of the acetylene flow. On this purpose, acetylene flow control means 26 allow, in a first time, a reduced acetylene flow through pipe 24, in such a way that piezoelectric ignition is not perturbed by a initially too strong acetylene flow. Immediately upon spark ignition, valve 27 allows acetylene full flow feeding. Pick-up and drop-out of valves 26,27 are controlled by operation cycle timing means 20 of operation cycle. Acetylene flow involves, thanks to the piezoelectric ignition, all internal walls of blank mold 1, particularly on bottom 10 of blank mold 1, by depositing a lubricating/detaching layer. Said deposit is also involving the internal walls of funnel 2, allowing that the glass gob freely drops substantially in correspondence with the blank mold center. Indeed, in the case of the presence of a pilot flame, it could happen that glass gob could be slacked by oxides, which are produced by the pilot flame and which are depositing on the internal walls of funnel 2. In the device according to the invention, thanks to the lubrication of funnel walls, glass gob is dropping into the blank mold, with no slackening in correspondence of tunnel walls, whereby an efficiency increase of the forming process could be obtained, as well as a better thickness uniformity of manufactured hollow, glassware.

In addition, as Fig.3 shows, the flame, which is obtained thanks to acetylene cracking, involves the internal side walls of the blank mold and, after reaching the bottom 10, leaves the mold 1 by flushing along the sleeve 9, both externally and internally. Indeed plunger 8, which lowers about one inch with respect to closing position (Fig.4), allows it. Just before electrodes 22 piezoelectric sparking, blow mold 11 closes and then revert phase is activated, i.e. reversal of arm 12 to blank mold 1 is actuated. Finally, the last blow into blow mold 11 and the take-out of formed bottle are operated.

If blank mold 18 of Figs.6,7,8 is considered, plunger 14 (and no counter-blow into blank mold 1) is producing pre-formed bottle. Everything is proceeding as described in previous phases, with the exception that no air blow from top is provided, whereas air blow from bottom (Fig.8) has the substantial task to have plunger 14 cooled, after manufacturing pre-formed glassware. Funnel 16 plays the same role as funnel 2 in Figs.2,3, whereas baffle 17, after positioning it on mold 18, is not required to co-operate with funnel 16, in contrast to what Fig.4 shows, where mold 1 is operating with funnel 2. It is apparent that acetylene black process is operating for mold 18 in the same way as mold 1 (Fig.3). It is sufficient to imagine some redrafts to Fig.6, where glass gob 3 disappears, plunger 14 lowers nearly one inch and sooting device, which comprises 21,22,23,24,26,27,28 components, is positioned above funnel 16. All the phases of acetylene black process will be repeated also in this case, in a substantially similar way, as it was already described for mold 1.

From description of how device and plant are working, some considerations are arising, which should be pointed out. Indeed, with respect to well known plants, device according to the invention presents the following differential elements:
- sooting device is operating as long as plugging means are not operating, i.e. as long as collar 6 and ring 7 are absent, because they were previously transferred by the inverting arm 12 towards blow mold 11. In addition, plunger 8 lowers with respect to its normal position during sooting process. All these facts allow that all internal walls of blank mold 1, and particularly bottom 10, are interested by acetylene black, as flame and sooting are not re-reverberated by plugging means. In such a way, plant efficiency and productivity can increase, as scraps, which are due to the missshaped glassware, are reduced to a minimum;
- acetylene black process, which is due to automatic sooting means, is interesting to be analyzed. With respect to well known plants, there is now no pilot flame, as ignition is due to piezoelectric sparking means (produced by device 23), which are controlled by timing means. As already stated, piezoelectric solution of sparking means, could be substitutet by a voltaic arc and electrical resistance solution.
   So, all drawbacks due to presence of pilot flame are avoided, which are technical, economical, as well as connected to environment-related conditions; particularly, a substantially reduction of costs of energy, which is consumed in a hollow glass forming plant, is obtained; in addition, production speed could be improved together with a decrease of bottle weight, thanks to its better thickness uniformity;
- electrodes 21 gap allows acetylene flow not to encounter any obstacle along its way, except ignition spark produced by the same electrodes 21. It is indeed an ignition of piezoelectric type, which substantially intervenes in the same moment, when acetylene starts flowing from pipe 24. At first, acetylene is fed at a substantially reduced pressure with respect to a normal pressure, thanks to valve 26, which controls a quite short initial bottleneck. In such a way, risk that spark is not started immediately after acetylene flows from pipe 24, is avoided. Then, starting from the moment, when acetylene is fed at a normal pressure, flame is burning in a stable way. So, risk that spark is not going to start immediately after acetylene flows from pipe 24 at full pressure, is avoided.

## Claims

1. Device for manufacturing glass containers, comprising:
- a blank mold (1),
-- the bottom (10) of said mold (1) being provided with plugging means having a plunger (8; 14) guided within a sleeve (9) and a collar (6), within which a ring (7) is fitted, for the insertion of said sleeve (9),
- a funnel (2) and a baffle (4) both being adapted to engage the upper opening of the mold (1), whereby the baffle (4) is also engageable with the upper opening of the funnel (2),
- and a sooting device adapted to deposit on the internal walls of the mold (1) a lubricating and detaching layer substantially made of carbon black,
characterised in that
- said sooting device comprises an acetylene feeding pipe (24) and electrical ignition sparking means (21, 22, 23), both being adapted to be positioned above the funnel (2), during one active cycle every n operating cycles, by an operation cycle timing means (20),
- said operation cycle timing means (20) controlling also the movement of the plugging means such that, during the sooting phase,
-- the plunger (8; 14) is lowered with respect to the sleeve (9) so as to disengage from the sleeve (9) and to allow acetylene flame product to flow through the sleeve (9) and around the plunger (8),
-- the collar (6) is disengaged from the sleeve (9) and from the bottom (10) of the mold (1).

2. Device according to claim 1, wherein said sparking means (21, 22, 23) are adapted to control a piezoelectric ignition of electrodes (22) which form a gap not interfering with said acetylene flow.

3. Device according to claim 2, wherein said electrical sparking means (21, 22, 23) are adapted to control a voltaic arc or an electric resistance.

4. Device according to any of the preceding claims, wherein the sooting phase takes place during the transfer, by means of an inverting element (12), of the collar (6) together with a preformed parison (15) from said blank mold (1) to a blow mold (11).

5. Device according to any of the preceding claims, wherein said operation cycle timing means (20) controls also a pressure modulating means in said acetylene feeding pipe (24) so as to reduce flow pressure at the beginning of the acetylene flow in every active sooting cycle and to feed said pipe (24) with substantially full pressure when the electrodes (22) have been ignited.

6. Device according to any of the preceding claims, wherein the parison (15) is formed by means of a counter-blow air (10a) fed through the open bottom (10) when said plunger (8) has been moved downwards in said sleeve (9).

## Patentansprüche

1. Vorrichtung zur Herstellung von Behältern aus Glas, umfassend:
- eine Vorform (1),
-- wobei der Boden (10) der Vorform (1) Verschlußmittel mit einem in einer Buchse (9) geführten Kolben (8; 14) und mit einem Kragen (6) aufweist, in dem ein Ring (7) befestigt ist, in den die Buchse (9) eingesetzt werden kann,
- einen Trichter (2) und einen Stopfen (4), die beide auf die obere Öfffnung der Vorform (1) aufgesetzt werden können, wobei der Stopfen (4) außerdem in die obere Öffnung des Trichters (2) einsetzbar ist,
- eine Berussungseinrichtung zur Beschichtung der Innenwände der Vorform (1) mit einer im wesentlichen aus Rußschwarz bestehenden Schmier- und Trennschicht,
dadurch gekennzeichnet,
- daß die Berussungseinrichtung ein Acetylen-Zuführrohr (24) sowie eine elektrische Zündeinrichtung (21, 22, 23) aufweist, die beide mittels eines Taktgebers (20) während eines aktiven Zyklus von jeweils n Arbeitszyklen in eine Stellung oberhalb des Trichters (2) gebracht werden können, und
- daß der Taktgeber (20) für die Steuerung der Arbeitszyklen auch die Bewegung der Verschlußmittel in der Weise steuert,
-- daß der Kolben (8; 14) relativ zu der Buchse (9) abgesenkt wird, bis er außer Eingriff mit dieser ist, damit das von der Acetylenflamme erzeugte Verbrennungsprodukt durch die Buchse (9) und um den Kolben (8) herum strömen kann,
-- daß der Kragen (6) außer Eingriff mit der Buchse (9) und dem Boden (10) der Vorform (1) kommt.

2. Vorrichtung nach Anspruch 1, dadurch gekennzeichnet, daß die Zündeinrichtung (21, 22, 23) für die Steuerung einer piezoelektrischen Zündung von Elektroden (22) ausgelegt ist, welche einen Spalt bilden, der den Acetylenfluß nicht behindert.

3. Vorrichtung nach Anspruch 2, dadurch gekennzeichnet, daß die Zündeinrichtung (21, 22, 23) für die Steuerung eines Lichtbogens oder eines elektrischen Widerstandes ausgelegt ist.

4. Vorrichtung nach einem der vorhergehenden Ansprüche, dadurch gekennzeichnet, daß die Berussungsphase stattfindet, während mit Hilfe eines Wendeorgans (12) der Kragen (6) zusammen mit dem vorgeformten Külbel (15) von der Vorform (1) in eine Blasform (11) überführt wird.

5. Vorrichtung nach einem der vorhergehenden Ansprüche, dadurch gekennzeichnet, daß der Taktgeber (20) für die Steuerung der Arbeitszyklen auch einen Druckwächter in dem Acetylen-Zuführrohr (24) derart steuert, daß zu Beginn des Acetylenflusses in jedem aktiven Arbeitszyklus der Druck reduziert wird und daß nach Zündung der Elektroden (22) das Zuführrohr (24) im wesentlichen mit dem vollen Druck gespeist wird.

6. Vorrichtung nach einem der vorhergehenden Ansprüche, dadurch gekennzeichnet, daß das Külbel (15) mittels eines Gegenblas-Luftstroms (10a) geformt wird, der durch den offenen Boden (10) zugeführt wird, wenn der Kolben (8) in der Buchse (9) abgesenkt worden ist.

## Revendications

1. Dispositif pour fabriquer des récipients en verre, comprenant :
- un moule ébaucheur (1),
- le fond (10) dudit moule (1) étant muni de moyens de plongeur ayant un plongeur (8 ; 14) quidé à l'intérieur d'une chemise (9) et un collier (6), à l'intérieur duquel est adaptée une bague (7), pour l'insertion de ladite chemise (9),
- un tunnel (2) et un déflecteur (4), l'un et l'autre étant adaptés pour s'engager sur l'ouverture supérieure du moule (1), de sorte que le déflecteur (4) peut également s'engager sur l'ouverture supérieure du tunnel (2),
- et un dispositif de poudrage adapté pour déposer sur la paroi interne du moule (1) une couche de lubrification et de décollement constituée sensiblement de noir de fumée,
caractérisé en ce que
- ledit dispositif de poudrage comprend une conduite d'alimentation en acétylène (24) et un moyen d'étincelage d'allumage électrique (21, 22, 23), l'un et l'autre étant adaptés pour être positionnés au-dessus du tunnel (2), pendant un cycle actif à chaque n cycles de fonctionnement, par un moyen de synchronisation de cycle de fonctionnement (20),
- ledit moyen de synchronisation de cycle de fonctionnement (20) commandant également le mouvement du moyen de plongeur de telle sorte que, pendant l'étape de poudrage,
-- le plongeur (8 ; 14) est abaissé par rapport à la chemise (9) de façon à sortir de la chemise (9) et à permettre à la flamme d'acétylène de s'écouler à travers la chemise (9) et autour du plongeur (8),
-- le collier (6) est dégagé de la chemise (9) et du fond (10) du moule (1).

2. Dispositif selon la revendication 1, dans lequel lesdits moyens d'étincelage (21, 22, 23) sont adaptés pour commander un allumage piézo-électrique d'électrodes (22) qui forment un espace qui n'interfère pas avec ledit flux d'acétylène.

3. Dispositif seien la revendication 2, dans lequel lesdits moyens d'étincelage électrique (21, 22, 23) sont adaptés pour commander un arc électrique ou une résistance électrique.

4. Dispositif seien l'une quelconque des revendications précédentes, dans lequel l'étape de poudrage se produit pendant le transfert, au moyen d'un élément inverseur (12), du coilier (6) ensemble avec une ébauche préformée (15) hors dudit meule d'ébauche (1) vers un moule de soufflage (11).

5. Dispositif seien l'une quelconque des revendications précédentes, dans lequel ledit moyen de synchronisation de cycle de fonctionnement (20) commande également un moyen de modulation de pression dans ladite canalisation d'alimentation en acétylène (24) de façon à réduire la pression de flux au début de l'écoulement d'acétylène à chaque cycle de poudrage actif et de façon à alimenter ladite canalisation (24) avec sensiblement la pleine pression lorsque les électrodes (22) ont été allumées.

6. Dispositif selon l'une quelconque des revendications précédentes, dans lequel l'ébauche (15) est formée au moyen d'un contre-flux d'air (10a) alimenté à travers le fond (10) ouvert lorsque ledit plongeur (8) a été déplacé vers le bas dans ladite chemise (9).
